Europäisches Patentamt

European Patent Office

Office européen des brevets

(19)

(11) Veröffentlichungsnummer: **0 301 328 B1**

(12)     # EUROPÄISCHE PATENTSCHRIFT

(45) Veröffentlichungstag der Patentschrift:
**24.04.91 Patentblatt 91/17**

(21) Anmeldenummer: **88111305.4**

(22) Anmeldetag: **14.07.88**

(51) Int. Cl.⁵: **B29C 73/00, B29C 65/48,
B63B 19/26, F16J 15/00,
// (B29K9/00, 75:00, 105:04,
B29L9:00, 31:26, 31:30)**

(54) **Verfahren zum Reparieren von defekten strangförmigen Elastomer/Schaumstoffdichtungen.**

(30) Priorität: **29.07.87 DE 3725025**

(43) Veröffentlichungstag der Anmeldung:
**01.02.89 Patentblatt 89/05**

(45) Bekanntmachung des Hinweises auf die
Patenterteilung:
**24.04.91 Patentblatt 91/17**

(84) Benannte Vertragsstaaten:
**BE CH ES FR GB GR IT LI NL SE**

(56) Entgegenhaltungen:
**AT-B- 197 075
AT-B- 206 636
DD-A- 98 641**

(73) Patentinhaber: **Bock, Karsten Alfred
Sonsbecker Weg 25
W-4005 Meerbusch 2 (DE)**

(72) Erfinder: **Bock, Karsten Alfred
Sonsbecker Weg 25
W-4005 Meerbusch 2 (DE)**

(74) Vertreter: **Döring, Wolfgang, Dr. Ing.
Mörikestrasse 18
W-4000 Düsseldorf 30 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Verfahren zum Reparieren von defekten strangförmigen Elastomer/Schaumstoffdichtungen, insbesondere von Lukendeckeln bei Schiffen, die nach Gebrauch eine bleibende Verformung in Form eines Eindrucks, einer Rille o.dgl. aufweisen.

Es ist bekannt, Deckel, Klappen etc. mit strangförmigen Dichtungen aus Vollelastomermaterial bzw. Schaumstoffmaterial zu versehen, um das Eindringen von Wasser in entsprechende Behältnisse zu verhindern. So werden insbesondere auf Schiffen entsprechende Lukendeckel mit derartigen Dichtungen versehen. Solche Lukendeckel werden beispielsweise zum Öffnen und Schließen flach verfahren, oder nach dem Faltprinzip zusammen- bzw. auseinandergeschoben. Es ist ferner bekannt, die Lukendeckel als Segmente ganz abzuheben und wieder auf die zu verschließenden Öffnungen aufzulegen oder die Lukendeckel scharnierartig auf- und zuzuklappen.

Da die entsprechenden Deckel, Klappen bzw. Lukendeckel im geschlossenen Zustand auf einem Metallrand zu liegen kommen, der die zu verschließende Öffnung umgrenzt, bildet sich im Laufe der Zeit in der Dichtung eine bleibende Verformung infolge von Alterungserscheinungen des Elastomermaterials. Mit anderen Worten, beim Öffnen der Klappe bzw. des Lukendeckels nimmt die Dichtung nicht mehr ihre ursprüngliche Form an, sondern es bleibt eine durch das Eindringen des Metallrandes in die Dichtung verursachte Rille bzw. ein einsprechender Eindruck. Dies hat zur Folge, daß beim erneuten Schließen der Klappe bzw. des Lukendeckels kein dichter Abschluß mehr zwischen dem Metallrand und der Dichtung vorhanden ist, da das Dichtungsmaterial den Metallrand nicht mehr dichtend um- greift. Somit ist die Wasserdichtigkeit nicht mehr gewährleistet, was insbesondere bei Schiffen zu ernsthaften Gefährdungen führen kann, da derartige Lukendeckel sehr große Abmessungen aufweisen können.

Zur Lösung des vorstehenden Problems besteht die Möglichkeit, die defekte Dichtung durch eine neue funktionsfähige Dichtung zu ersetzen. Dieser Weg erweist sich jedoch als kostspielig, da derartige Dichtungen relativ rasch verschleißen. Darüberhinaus stehen nicht an jedem Ort entsprechende Ersatzdichtungen zur Verfügung, was insbesondere bei auf Fahrt befindlichen Schiffen von Bedeutung ist.

Um den Weg des Austausches der gesamten Dichtung zu vermeiden, ist man auch bereits so vorgegangen, daß man die in der defekten Dichtung vorhandenen Eindrücke bzw. Vertiefungen mit einer Spezialpaste ausfüllt und aushärten läßt. Auf diese Weise lassen sich defekte Dichtungen zufriedenstellend wieder in einen funktionsfähigen Zustand bringen. Das Verfahren hat jedoch den Nachteil, daß hierzu Spezialwerkzeug benötigt wird.

Der Erfindung liegt die Aufgabe zugrunde, ein Verfahren der angegebenen Art zur Verfügung zu stellen, mit dem sich in einfacher und kostengünstiger Weise derartige defekte Dichtungen reparieren lassen. Die Reparatur soll insbesondere auch dort durchgeführt werden können, wo kein Spezialwerkzeug zur Verfügung steht.

Diese Aufgabe wird erfindungsgemäß durch ein Verfahren der angegebenen Art gelöst, das durch die folgenden Schritte gekennzeichnet ist :

a) Herstellen eines den Abmessungen des Eindrucks entsprechenden Elastomer/Schaumstoff-Wulstes ;

b) Versehen des Wulstes mit einer an die Breitenabmessung der Dichtung angepaßten Unterlage ; und

c) Einlegen des Wulstes in den Eindruck und Verkleben des Wulstes und der Unterlage mit der Dichtung.

Bei dem erfindungsgemäßen Verfahren wird somit ein mit einer Unterlage versehener Wulst in den Eindruck der defekten Dichtung gelegt und mit der Dichtung verklebt. Es ergibt sich dann eine erneuerte Dichtung, die wieder eine ebene Dichtungsfläche besitzt, welche durch die dem Wulst gegenüberliegende Seite der Unterlage gebildet wird. Da der Wulst in seinen Abmessungen, d.h. seiner Tiefe und Breite, an die Abmessungen des Eindrucks angepaßt ist, wird der entstandene Hohlraum durch den Wulst nahezu vollständig ausgefüllt, so daß keine Hohlräume mehr verbleiben, die das Dichtungsverhalten beeinträchtigen, und eine sehr gute Haftung zwischen dem Wulst und dem Rand des Eindrucks erreicht wird. Die Unterlage ist in ihrer Breite an die Breite der Dichtung angepaßt, so daß nach dem Verkleben eine erneuerte Dichtung erhalten wird, deren optisches Erscheinungsbild nahezu einer neuwertigen Dichtung entspricht.

Das erfindungsgemäße Verfahren bietet den Vorteil, daß die Reparatur von derartigen Dichtungen mit einfachen Mitteln und in kostengünstiger Weise durchgeführt werden kann. Grundsätzlich ergeben sich zwei mögliche Verfahrensvarianten : zum einen können die Eindrücke der defekten Dichtungen an Ort und Stelle vermessen werden, und es können in Anpassung an die Tiefe und Breite des jeweiligen Eindrucks entsprechende Wulste gefertigt, mit der Unterlage verklebt und dann in die entsprechenden Eindrücke eingesetzt werden. Diese Verfahrensvariante bietet sich insbesondere dort an, wo keine große Lagerhaltung von entsprechenden Reparaturmaterialien, d.h. Wulsten und Unterlagen für beliebige Größen, möglich ist. Für dieses Verfahren bietet es sich an, den Wulst durch entsprechende Teilung eines Schlauches herzustellen, wobei der Schlauch je nach Tiefe des Eindrucks beispielsweise halbiert, gedrittelt oder geviertelt werden kann. Der auf diese Weise hergestellte Wulst wird dann mit einer geeigneten Unterlage, bei der es sich um eine einfache Gummiplatte handeln kann, verklebt.

Bei einer anderen Verfahrensvariante werden mit Unterlagen versehene Wulste in verschiedenen Größen hergestellt, wobei die jeweiligen Wulstgrößen aus Erfahrungswerten von Eindrucktiefen und -breiten festgelegt werden. Auch die Abmessungen der Unterlagen werden an die Abmessungen von üblichen Dichtungen angepaßt. Bei dieser Variante wird dann nach Besichtigung der schadhaften Dichtung und Feststellung der Abmessungen des Eindrucks der geeignete Reparaturwulst ausgewählt und in der vorstehend beschriebenen Weise mit der Dichtung verklebt.

In der Regel wird man das erforderliche, aus Wulst und Unterlage bestehende Reparaturstück so herstellen, daß man einen größenmäßig entsprechend abgestimmten Wulst mit einer entsprechenden Unterlage verklebt. Wie vorstehend erwähnt, bietet diese Vorgehensweise den Vorteil, daß man an Ort und Stelle einen Wulst in Anpassung an den entsprechenden Eindruck fertigen kann. Darüberhinaus bestehen in der Regel Wulst und Unterlage aus verschiedenen Materialien, so daß sich die vorstehend geschilderte Vorgehensweise anbietet. Dies schließt jedoch nicht aus, daß Wulst und Unterlage auch einstückig hergestellt werden können.

Die vorliegende Erfindung betrifft insbesondere ein Verfahren zum Reparieren von Schaumstoffdichtungen, die mit einer ölfesten Ummantelung aus einem ungeschäumten Elastomer, insbesondere Synthesekautschuk, versehen sind. Derartige Dichtungen sind als Abdichtungen von Lukendekkeln weit verbreitet. Erfindungsgemäß wird dabei ein Schaumstoffwulst hergestellt und mit einer Unterlage aus dem ungeschäumten Elastomer versehen, insbesondere verklebt. Unterlage und Wulst bestehen vorzugsweise aus den gleichen Materialien wie die Ausgangsdichtung. Als Schaumstoff findet dabei insbesondere Polyurethan-Schaumstoff Verwendung.

Zum Verkleben des Wulstes mit der Unterlage und des aus dem Wulst und der Unterlage bestehenden Reparaturstückes mit der Ausgangsdichtung findet zweckmäßigerweise ein Kontaktkleber Verwendung.

Das erfindungsgemäße Verfahren wird nachfolgend anhand eines Ausführungsbeispiels in Verbindung mit der Zeichnung im einzelnen erläutert. Es zeigen :

Figur 1 einen Schnitt durch eine in einem Metallrahmen eines Lukendeckels angeordnete Lukendekkeldichtung, wobei die Dichtung um 180° verdreht dargestellt ist ;

Figur 2a einen Schnitt durch einen Vollschlauch, der zur Herstellung eines Wulstes verwendet wird ;

Figur 2b einen Schnitt durch ein fertiges Reparaturstück mit einem auf eine Unterlage geklebten Wulst ; und

Figur 3 einen Schnitt durch die Dichtung der Figur 1 im reparierten Zustand.

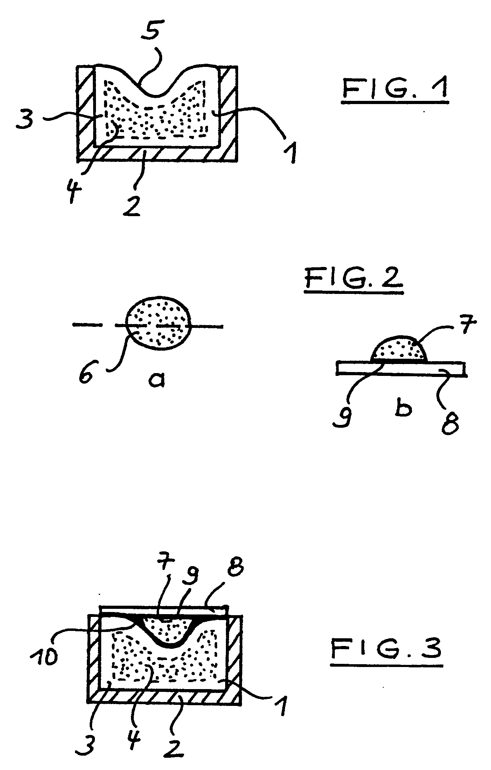

Die in Figur 1 im Querschnitt dargestellte Lukendeckeldichtung 1 besteht aus einem Polyurethan-Schaumstoffkern 4, der eine ölfeste Ummantelung 3 aus Synthese-Kautschuk aufweist. Die Dichtung 1 ist in einem Metallrahmen 2 des Lukendeckels angeordnet. Im geschlossenen Zustand des Lukendeckels liegt die Dichtung auf einem Metallrand auf, der eine Vertiefung in die Dichtung drückt, welche als Eindruck 5 dargestellt ist. Mit zunehmendem Alter der Dichtung büßt diese ihr elastisches Verhalten ein, so daß auch im unbelasteten Zustand der Dichtung der Eindruck 5 als bleibende Verformung permanent vorhanden ist.

Bei dem hier beschriebenen Ausführungsbespiel des Verfahrens zur Reparatur der Dichtung wird zuerst die Eintiefung 5 von Schmutz, Öl etc. gereinigt. Sollten vorstehende bzw. lose Gummireste vorhanden sein, so werden diese abgeschnitten bzw. abgeschliffen. Danach wird der Eindruck 5 ausgemessen, d.h. seine Breite, Tiefe und Länge bestimmt. Wenn diese Werte ermittelt worden sind, wird ein geeigneter Schaumstoffschlauch 6, der entsprechende Abmessungen wie der Eindruck 5 aufweist, so zerteilt, daß ein Wulst 7 hergestellt wird, dessen Abmessungen etwa dem Eindruck 5 entsprechen. Dieser Wulst 7 wird dann mit seiner flachen Hälfte bei 9 über einen geeigneten Spezialkleber mit einer Unterlage 8 aus Synthese-Kautschuk verklebt. Die Unterlage besteht aus dem gleichen Material wie die Dichtung 1 und besitzt eine dieser entsprechende Breite.

Nach dem Aushärten der Kleberschicht 9 wird das aus dem Wulst 7 und der Unterlage 8 bestehende Reparaturstück so an der defekten Dichtung angebracht, daß der Wulst 7 in dem Eindruck 5 zu liegen kommt. Die Oberfläche des Eindrucks 5 und der benachbarten Dichtungsbereiche bzw. die Oberfläche des Wulstes und der Unterlage sind vorher mit einem geeigneten Spezialkleber versehen worden. Nach entsprechender Pressung härtet der Kleber aus, und es wird eine feste hohlraumfreie Verbindung zwischen der Dichtung und dem Reparaturstück hergestellt. Dabei füllt die entsprechende Kleberschicht 10 noch ggf. bestehende Zwischenräume zwischen dem Reparaturstück und der Dichtung aus.

Die Dichtung kann nunmehr erneut belastet werden, ohne daß der auf der Unterlage zu liegen kommende Metallrand irgendeine bleibende Verformung in der Dichtung zurückläßt.

## Ansprüche

1. Verfahren zum Reparieren von defekten strangförmigen Elastomer/Schaumstoffdichtungen, insbesondere von Lukendeckeln bei Schiffen, die nach Gebrauch eine bleibende Verformung in Form eines Eindrucks, einer Rille o.dgl. aufweisen, gekennzeichnet durch die folgenden Schritte :

    a) Herstellen eines den Abmessungen des Eindrucks entsprechenden Elastomer/Schaumstoff-Wulstes ;

    b) Versehen des Wulstes mit einer an die Breitenabmessung der Dichtung angepaßten Unterlage ; und

    c) Einlegen des Wulstes in den Eindruck und Verkleben des Wulstes und der Unterlage mit der Dichtung.

2. Verfahren nach Anspruch 1, dadurch gekennzeichnet, daß die Abmessungen des Eindrucks der zu reparierenden Dichtung erfaßt werden und daß der Wulst nach diesen Abmessungen hergestellt wird.

3. Verfahren nach Anspruch 1 oder 2, dadurch gekennzeichnet, daß der Wulst und die Unterlage einstückig hergestellt werden.

4. Verfahren nach Anspruch 1 oder 2, dadurch gekennzeichnet, daß der Wulst mit der Unterlage verklebt wird.

5. Verfahren nach einem der Ansprüche 1, 2 oder 4, dadurch gekennzeichnet, daß der Wulst durch Zerteilen eines Vollschauches hergestellt wird.

6. Verfahren nach einem der vorangehenden Ansprüche zum Reparieren von Schaumstoffdichtungen, die mit einer ölfesten Ummantelung aus einem ungeschäumnten Elastomer, insbesondere Synthesekautschuk, versehen sind, dadurch gekennzeichnet, daß ein Schaumstoffwulst hergestellt und mit einer Unterlage aus dem ungeschäumten Elastomer versehen wird.

7. Verfahren nach einem der vorangehenden Ansprüche, dadurch gekennzeichnet, daß die defekte Dichtung im Bereich ihres Eindrucks zur Herstellung einer glatten Fläche und zur Entfernung von Fremdpartikeln vor dem Einlegen des Wulstes gereinigt und-/oder glattgeschliffen wird.

## Claims

1. A method of repairing defect string-like elastomer/foamed material seals, especially of hatch covers on ships, which after use have a permanent deformation in the shape of an impression, a groove etc., characterized by the following steps :

    (a) preparing an elastomer/foamed material bead corresponding in its dimensions to the dimensions of the impression ;

    (b) providing the bead with a substrate adapted to the width of the seal ; and

    (c) inserting the bead into the impression and adhering the bead and the substrate to the seal.

2. The method according to claim 1, characterizing in that the dimensions of the impression of the seal which is to be repaired are determined and that the bead is made according to these dimensions.

3. The method according to claim 1 or 2, characterized in that the bead and the substrate are fabricated in one piece.

4. The method according to claim 1 or 2, characterized in that the bead is adhered to the substrate.

5. The method according to one of the claims 1, 2 or 4, characterized in that the bead is fabricated by dividing a complete hose.

6. The method according to one of the preceding claims of repairing of foamed material seals which are provided with an oil resistant sheath of a non-foamed elastomer, especially synthetic rubber, characterized by fabricating a foamed material bead and providing the same with a substrate consisting of the non-foamed elastomer.

7. The method according to one of the preceding claims, characterized by cleaning and/or smoothly grinding the defect seal in the portion of its impression for preparing a smooth surface and for removing foreign particles prior to inserting the bead.

## Revendications

1. Procédé de réparation de joints d'étanchéité en élastomère/mousse en forme de cordons, et en particulier de joints de panneaux d'écoutille sur les bateaux qui, à l'usage, présentent une déformation permanente sous la forme d'une empreinte, d'une rainure ou autre caractérisé par les étapes suivantes :

    a) fabrication d'un boudin en élastomère/mousse correspondant aux dimensions de l'empreinte ;

    b) pose sur le boudin d'un support adapté à la largeur du joint ; et

    c) logement du boudin dans l'empreinte et collage de l'ensemble boudin-support au joint.

2. Procédé selon la revendication 1 caractérisé en ce que les dimensions de l'empreinte du joint à réparer sont saisies et que le boudin est fabriqué à ces dimensions.

3. Procédé selon la revendication 1 ou 2 caractérisé en ce que le boudin et le support sont fabriqués en une seule pièce.

4. Procédé selon les revendications 1 ou 2 caractérisé en ce que le boudin est collé au support.

5. Procédé selon une des revendications 1, 2 ou 4 caractérisé en ce que le boudin est fabriqué par fractionnement d'un tuyau plein.

6. Procédé selon une des revendications précédentes de réparation de joints d'étanchéité en mousse munis d'une gaine étanche à l'huile en élastomère non moussé, en particulier en caoutchouc de synthèse, caractérisé en ce qu'un boudin en mousse est fabriqué et muni d'un support en élastomère non moussé.

7. Procédé selon une des revendications précédentes caractérisé en ce que le joint défectueux est nettoyé et/ou poli dans la région de son empreinte pour produire une surface lisse et enlever les particules étrangères avant l'application du boudin.

FIG. 1

FIG. 2

FIG. 3